# Europäisches Patentamt
# European Patent Office
# Office européen des brevets

(11) Publication number: **0 055 485**
**B1**

(12) **EUROPEAN PATENT SPECIFICATION**

(45) Date of publication of patent specification: **12.03.86**

(21) Application number: **81110822.4**

(22) Date of filing: **29.12.81**

(51) Int. Cl.⁴: **G 11 B 3/44, G 11 B 3/46**

(54) **Information signal regenerating stylus and manufacturing method thereof.**

(30) Priority: **29.12.80 JP 188664/80**
**27.10.81 JP 172311/81**

(43) Date of publication of application:
**07.07.82 Bulletin 82/27**

(45) Publication of the grant of the patent:
**12.03.86 Bulletin 86/11**

(84) Designated Contracting States:
**DE FR GB**

(56) References cited:
**DE-A-2 741 163**
**DE-A-2 751 164**
**US-A-4 124 867**

**Patent Abstracts of Japan, vol. 4, no. 184, 18 December 1980**

**Patent Abstracts of Japan, vol. 2, no. 141, 22 November 1978, page 8813E78**

(73) Proprietor: **Matsushita Electric Industrial Co., Ltd.**
**1006, Oaza Kadoma**
**Kadoma-shi Osaka-fu, 571 (JP)**

(72) Inventor: **Yoshikane, Tetsuo**
**21-2, Kisaichiyamate-3-chome**
**Katano-shi (JP)**
Inventor: **Kagata, Akira**
**14-3, Naritaminamimachi**
**Neyagawa-shi (JP)**
Inventor: **Hiura, Hiromi**
**10-307, Ikuno-4-chome**
**Katano-shi (JP)**

(74) Representative: **Patentanwälte Leinweber & Zimmermann**
**Rosental 7/II Aufg.**
**D-8000 München 2 (DE)**

Courier Press, Leamington Spa, England.

## Description

The present invention relates to a pick-up stylus having a conical stylus base of non-conductive material and a tip formed on said base, said tip comprising a face adapted for contacting a recording disc and having a portion of its lateral surface in common with a portion of the lateral surface of said base, said common surface portion having an electrode formed thereon, said electrode being confined by two parallel portions of the lateral surface of said tip in order to form a substantially constant width of said electrode in the region of the tip. The present invention further relates to a manufacturing method for a pick-up stylus of that type.

As disclosed in Japanese Patent Laid-Open No. 140516/1979, the so-called electrostatic capacity system is considered at present for detection of an information signal as a variance of electrostatic capacity on a pick-up stylus with its base consisting of diamond or the like applied with an electrode under running and driving a disc in which the information signal is recorded in sequence as a variance in geometrical shape so as to have a spiral recording locus without providing particularly a recording signal channel to guide the pick-up stylus on the surface of the disc. According to this system, resolution can be improved by minimizing the electrode applied on the pick-up stylus in thickness and width as compared with a bit size corresponding to the information signal, and a constitution of a play-back system is simplified as compared with an optical system wherein the information signal recorded in the disc is read optically, thus giving various advantages as known well, and in respect thereto, many an information signal pick-up stylus for use on said electrostatic capacity system has been proposed in the industry concerned. For example, there is proposed such an information signal pick-up stylus for which an electrode part is sticked on one side of a stylus base in triangular pyramid and then cut in at the tip to a constant width in the wear direction. This pick-up stylus has its length in the direction of sliding to the disc increased in accordance as it is worn out and is thus not capable of coping with a deflection of the disc, resulting in a shape deterioration of S/N ratio or a defect of dust sticking and stylus flying. Then, the length in the sliding direction of the pick-up stylus is limited according to the disc deflection, which is capable of marring the disc surface from a stylus pressure per unit area exceeding allowable limit of an elasticity of the disc.

The same problems also occur with a known pick-up stylus of the above-referenced type (US—A—4 124 867) in which the tip face contacting the recording disc increases in area as the stylus wears away although maintaining the width of the electrode in the region of the tip at a substantial constant value. This increase in area is due to the fact that the stylus base extends in pyramidal form over the tip face which is generally in the shape of a triangular surface recessed in the region of the electrode by the edges of the parallel portions of the lateral surface defining the width of the electrode. Since the tip face is therefore generally constituted by a cross-sectional plane of the pyramidal stylus base growing conically wider the area of the tip face increases when wear of the stylus in the heightwise direction of the pyramidal stylus base goes on.

Furthermore, this known pick-up stylus shows draw-backs in its manufacture by a rotating grinder having an abrasive channel in which the axially parallel portions of the lateral surface confining the electrode are produced by grinding. Since these axially parallel portions of the lateral surface are formed in a triangular shape the stylus base has to be maintained with its electrode bearing lateral surface under a substantially acute angle with respect to the radial surface of the rotating grinder. Accordingly, the electrode surface may be injured by foreign matters or grinding particles present in the abrasive channel.

Another information signal pick-up stylus is obtainable through sticking the electrode part on one side of a stylus base in pentagonal pyramid which is formed with diamond or the like. This pick-up stylus needs a high precision on the tip and further requires a large amount of mechanical grinding of the stylus base for the shape of pentagonal pyramid, thus limiting mass productivity.

It is therefore an object of the present invention to provide an information signal pick-up stylus of the above-referenced type in which a change in sliding area of the face of the tip due to wear of the stylus is minimized.

In order to attain this object, the invention is characterized in that all of the lateral surface portions of the tip are parallel to said electrode so that the tip is generally in the form of a cylinder.

The pick-up stylus according to the invention is superior in mass productivity and does not entail a volume of high precision mechanical grinding at the time of manufacture.

The present invention also provides a manufacturing method for the pick-up stylus by which working efficiency is improved.

Brief Description of the Drawings

Fig. 1 is an essential part perspective view representing one example of a conventional pick-up stylus;

Fig. 2 is a diagram illustrating how said pick-up stylus operates;

Fig. 3A is an essential part perspective view representing another example of the conventional pick-up stylus, and

Fig. 3B is a perspective view illustrating how said pick-up stylus operates;

Fig. 4 is an essential part perspective view representing the first embodiment of the invention;

Fig. 5 is an essential part perspective view representing another embodiment of the invention;

Fig. 6 to Fig. 9 are bottom views representing further embodiment of the invention;

Fig. 10, Fig. 11 and Fig. 12 are perspective views of a stylus base used for a manufacturing method according to the invention;

Fig. 13 is a side sectional view of a grinder used for the invention;

Fig. 14 is a perspective view illustrating a grinding state in the manufacturing method of the invention;

Fig. 15 is a perspective view showing a tip of one embodiment of the pick-up stylus manufactured according to the invention;

Fig. 16 is a perspective view representing one embodiment of a grinding device used for the invention;

Fig. 17 is an essential part side view thereof;

Fig. 18 and Fig. 19 are diagrams illustrating a grinding operation of an embodiment of the invention;

Fig. 20A to Fig. 20E are plan views of a tip of the pick-up stylus manufactured according to the invention;

Fig. 21 is a diagram illustrating a grinding operation of another embodiment of the invention;

Fig. 22 is a perspective view illustrating a grinding operation in further embodiment of the invention;

Fig. 23A and Fig. 23B are diagrams to illustrate a grinding operation of said embodiment;

Fig. 24 is a side sectional view representing another embodiment of a grinding used for the invention; and

Fig. 25 is a perspective view showing a tip of the pick-up stylus ground on said grinder.

Description of the Preferred Embodiment

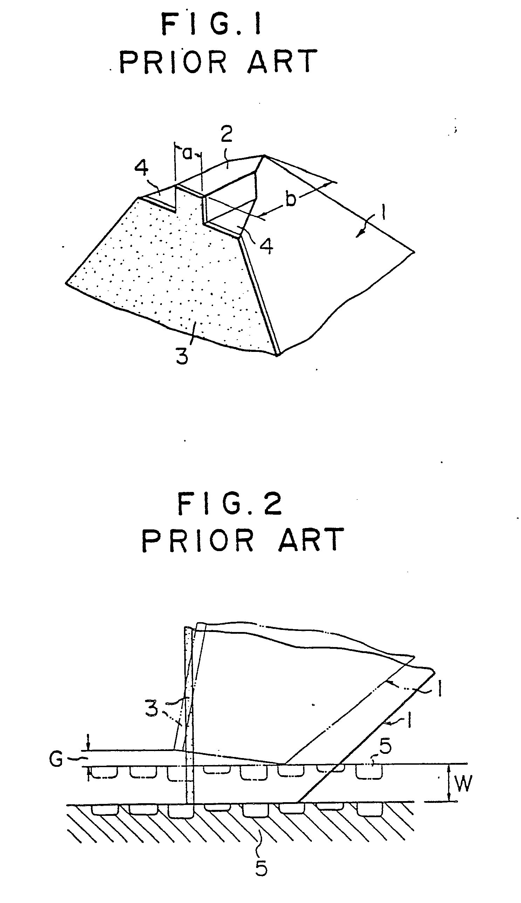

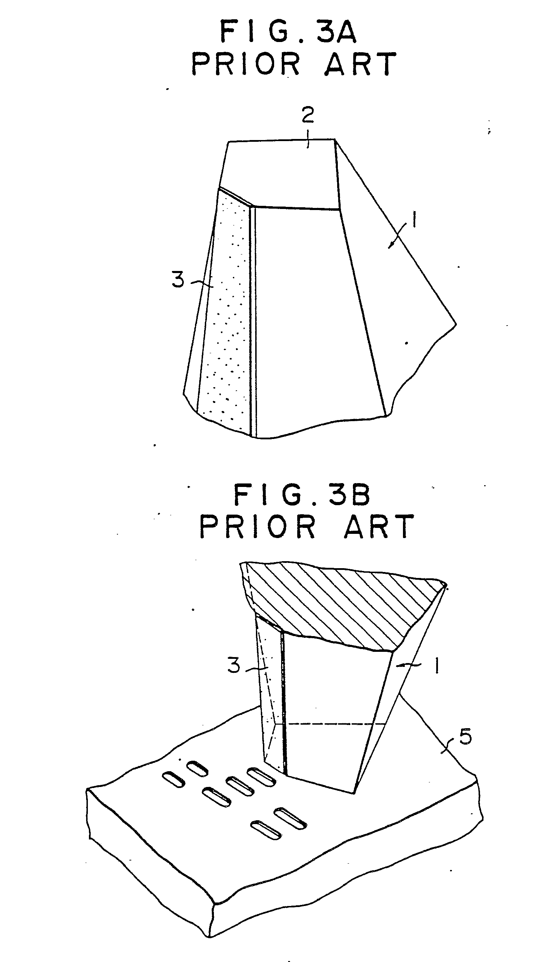

With reference to Fig. 1, there is illustrated a known pick-up stylus provided with an electrode part (3) on one side of a stylus base (1) ground to a triangular pyramid and also with a cut (4) at the tip so as to keep the electrode part (3) working as an information signal detecting part at a constant width (a) to the direction in which a wear of the pick-up stylus proceeds, and shaped so that the length in the sliding direction of a sliding face (2) with a disc will get large in accordance as a wear of the stylus proceeds. Now, the width (a) of the electrode part (3) is not changeable according to a change in the worn-out direction of the pick-up stylus, however, a change in the length (b) in the sliding direction is striking, and the stylus is not capable of coping with a deflection (W) of a disc (5) accordingly, thus resulting in a sharp deterioration of S/N ratio or a defect of dust sticking and stylus flying, as shown in Fig. 2. Namely, where the disc (5) changes a position given in continuous line to a position given in two-dot chain line by (W) as indicated in Fig. 2, the pick-up stylus also changes as shown in two-dot chain line, which is capable of causing a gap (G) between the disc (5) and the electrode part (3). To obtain a stable picture, meantime, the electrode width (a) must be minimized to about 1 μm, and the sliding direction length (b) determining the pressure onto the disc should not increase with wear. Figs. 3A, 3B show a known stylus whose stylus base (1) of non-conductive material being superior in wear resistance like diamond is formed to a pentagonal pyramid, and the electrode part (3) is provided on its one side. In the drawing, (2) indicates a sliding face, and (5) indicates a disc.

In the above constitution, the stylus base must be ground to a given pentagonal pyramid as a whole with a high precision which is required on the tip, thus involving a high amount of mechanical grinding work from which mass productivity cannot be expected.

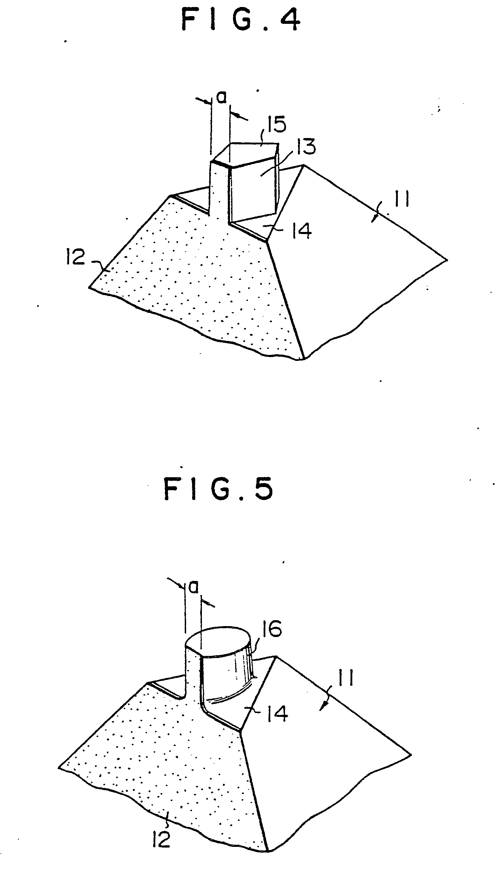

Fig. 4 represents one embodiment of the invention, wherein an electrode part (12) is provided on one side of a stylus base (11) ground to a triangular pyramid, and a pentagonal prism (13) for which a part of the side on which said electrode part (12) is provided becomes one side with a constant width (a) is formed on the tip. Namely, said pentagonal prism (13) is formed on the tip of the stylus base (11) in triangular pyramid to project from a face (14) which becomes almost parallel with the disc face at the time of reproduction. According to this constitution, an area of sliding face (15) with the disc will not increase in accordance as a wear due to reproduction operation proceeds, and the width (a) of the electrode part (12) will not change. Further, only moderate working precision is required in a large working area for grinding the stylus base (11) to triangular pyramid at the time of manufacture, therefore the working is facilitated so much; the pentagonal prism (13) for which a high working precision is required on the tip is small in working area, therefore the working time can be shortened.

Fig. 5 represents another embodiment of the invention, wherein the tip (16) is horseshoeshaped in section and has a part of its lateral surface on which the electrode part (12) is provided in common with one side of the stylus base (11) in triangular pyramid.

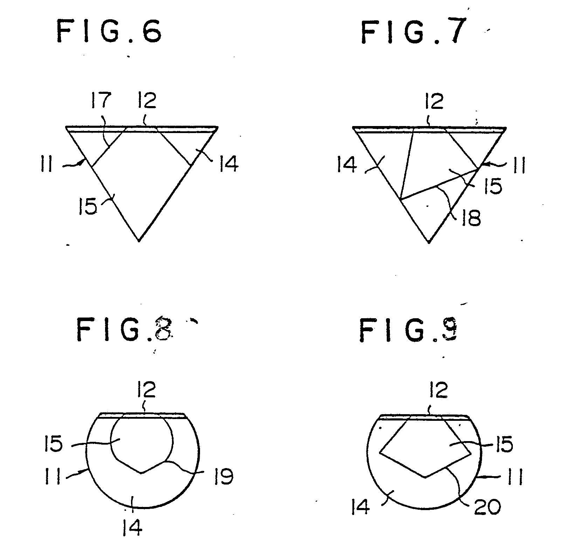

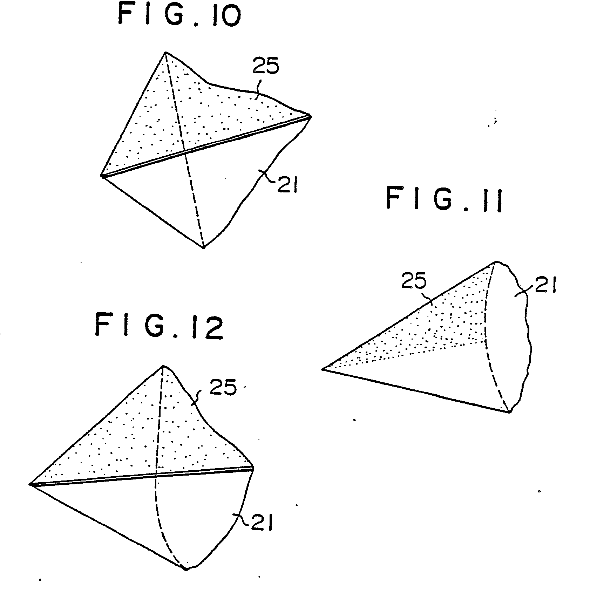

Fig. 6, Fig. 7, Fig. 8 and Fig. 9 represent further embodiments of the invention. In Fig. 6 the tip on the stylus base (11) in triangular pyramid is in the form of a pentagonal prism (17) symmetrical left and right; in Fig. 7 the tip on the stylus base (11) in triangular pyramid is in the form of a tetragonal prism (18) asymmetrical left and right; in Fig. 8 the tip on the conical stylus base (11) is in the form of a prism (19) horseshoe in section; in Fig. 9 the tip on the conical stylus base (11) is in the form of a pentagonal prism (20).

Next, an effective method for manufacturing the information signal pick-up stylus of the invention will be taken up for description.

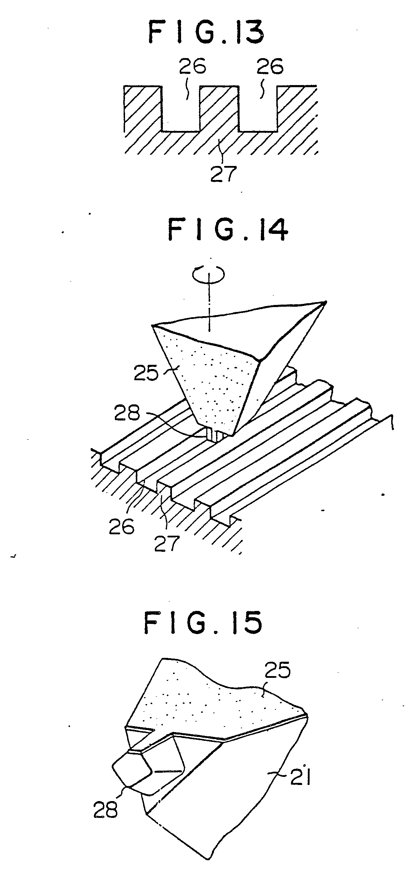

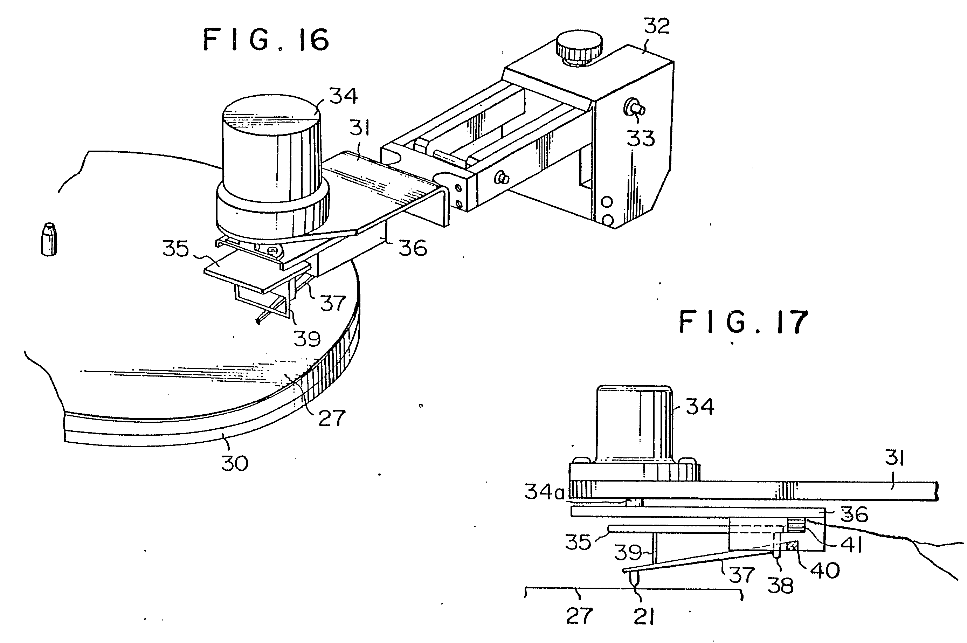

A conical stylus base in triangular pyramid, cone or a synthesized shape thereof which is relatively easy for working is used as a starting material as shown in Fig. 10, Fig. 11 and Fig. 12, with an electrode (25) provided on one side thereof. A grinder (27) having a channel (26) with both sides almost in parallel and the bottom in flat concavity as shown in Fig. 13 is rotated. As shown in Fig. 14 the conical stylus base (21) is rotated and stopped at a given range of angles about a longitudinal axis thereof, and a tip (28) is pressed onto a channel (26) of said grinder (27) and detached therefrom repeatedly, thereby forming a prism or prismoid projection (28) having an electrode almost parallel longitudinally at the tip of the pick-up stylus as shown in Fig. 15.

Next, the grinding method will be described in detail with reference to Fig. 16 to Fig. 20. In Fig. 16, (30) denotes a turntable having said grinder (27) mounted thereon and rotated at a constant speed, and (31) denotes an elevating lever supported on a fixed support (32) for ready turning round a shaft (33), and having a motor (34) fixed on the tip.

A motor shaft (34a) of the motor (34) penetrates said elevating lever (31), and a holder support (36) to detachably support a grinding holder (35) is fixed on its tip.

A cantilever (37) with the pyramidal stylus base (21) to grind fixed on the tip is fixed on said grinding holder (35) through an elastic body (38) like rubber which is given near its terminal, and a rubber ring (39) is provided between the neighborhood of the tip of the cantilever (37) and the grinding holder (35). A magnet (40) is fixed at the end of the cantilever (37), and a construction is such that the magnet (40) will be kept opposite to a solenoid (41) fixed on the support (36), as shown in Fig. 17, when the grinding holder (35) is installed on said support (36).

Namely, the cantilever (37) is turned round the elastic body (38) by controlling a current flowing to the solenoid (41), thereby adjusting a contact pressure between the stylus base (21) and the grinder (27) and isolating from the grinder (27).

Then, the stylus base (21) will come to position on an extension of the motor shaft (34a).

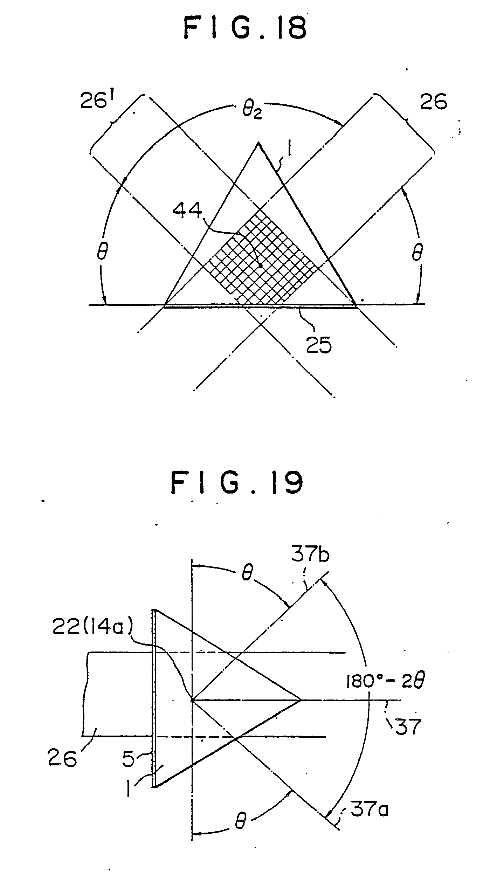

The stylus base (21) in triangular pyramid is now mounted on the cantilever (37) so as to have the electrode (25) almost at right angle to the grinding face, and the motor (34) is rotated so that the face of the electrode (25) and the channel (26) of the grinder (27) will make a given angle θ as shown in Fig. 18, thereby determining a turning angle of the stylus base (21).

Then, from commencing grinding by carrying a given current to the solenoid (41) to contact the stylus base (21) with the grinder (27), a portion positioned on the channel (26) of Fig. 18 is left as it is and the other portion is removed through grinding.

Next, the current is interrupted from flowing to the solenoid (41) to detach the stylus base (21) from the grinder (27), and the motor (34) is rotated by $θ_2$ to turn the stylus base (21) by $θ_2$ $(= 180° - 2θ)$ round a shaft center (44) (positioned on an extension of the motor shaft (34a)) in Fig. 18, thereby keeping the stylus base (21) and the channel (26) in a positional relation indicated in a channel (26') of Fig. 18.

From commencing grinding by moving the stylus base (21) downward thereafter, a portion positioned on the channel (26') of Fig. 18 is left as it is and the other portion is removed through grinding, thus forming a pentagonal prism indicated by oblique line in Fig. 18. With reference to a rotational angle of the motor (34) in this case, where the cantilever (37) for which the electrode face (25) of the base (21) is paralleled with a width direction of the channel (26) as shown in Fig. 19 extends longitudinally of the channel (26), the cantilever is first turned as far as a position (37a) and then turned to a position (37b) for grinding. Practically it is preferable that it will be moved to positions (37a) and (37b) alternately plural time for grinding step by step as a whole.

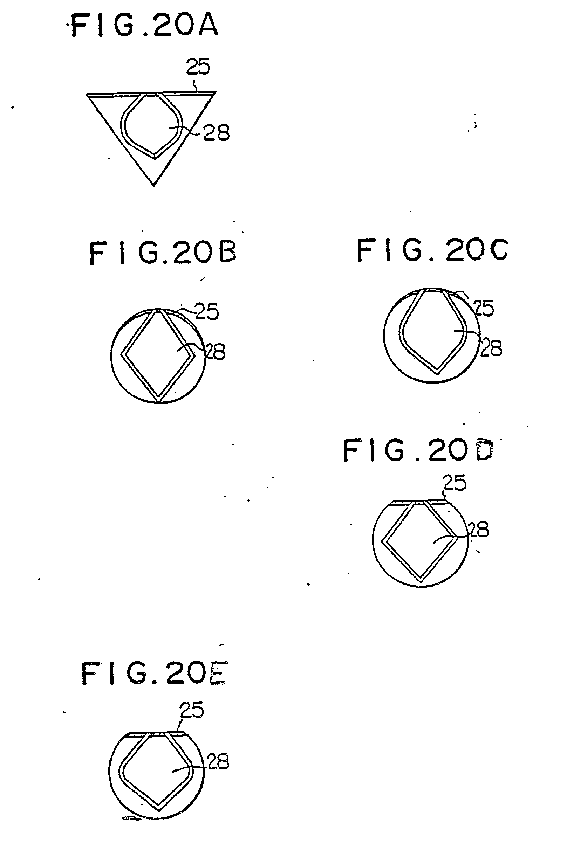

Then, the projection (28) in circular truncated cone can be formed like that of Fig. 20A by turning the cantilever (37) between the positions (37a) and (37b) with the base (21) pressed onto the channel (26).

Furthermore, projections (28) in the shape of Fig. 20B and Fig. 20C are obtainable through arranging a shape of the base (21) in circular truncated cone, and projections (28) in the shape of Fig. 20D and Fig. 20E are obtainable similarly through arranging a shape of the base (21) in circular truncated cone having the plane electrode (25) partly as shown in Fig. 12.

A grinding method wherein the electrode (25) extending longitudinally of the projection (28) can be manufactured with constant width will be described next.

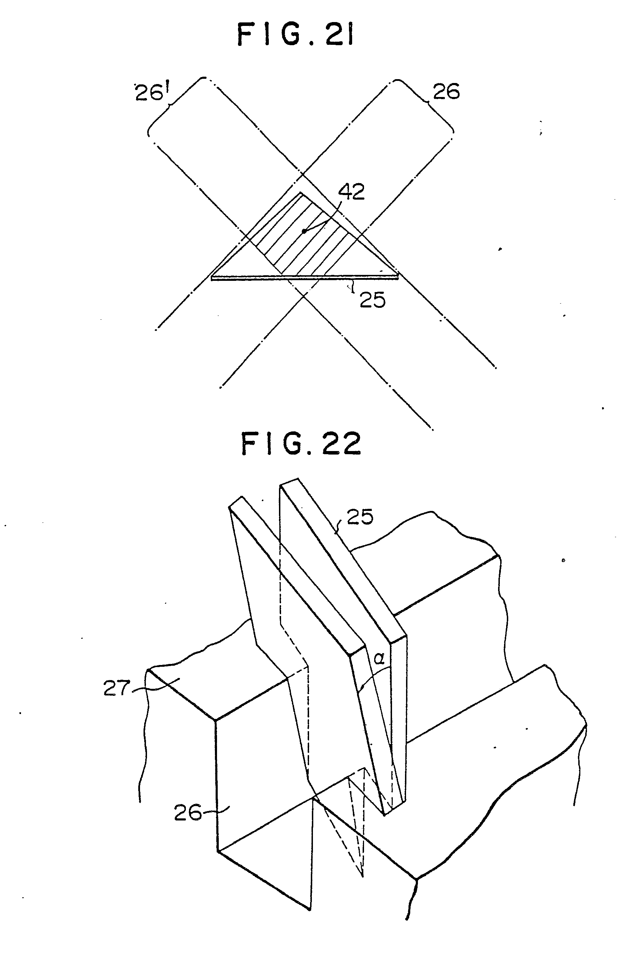

In the above description, the electrode (25) provided on the base (21) (not illustrated in Fig. 22) is ground as vertical to the grinder (27) and inclined in a width direction of the channel (26) as illustrated in Fig. 22.

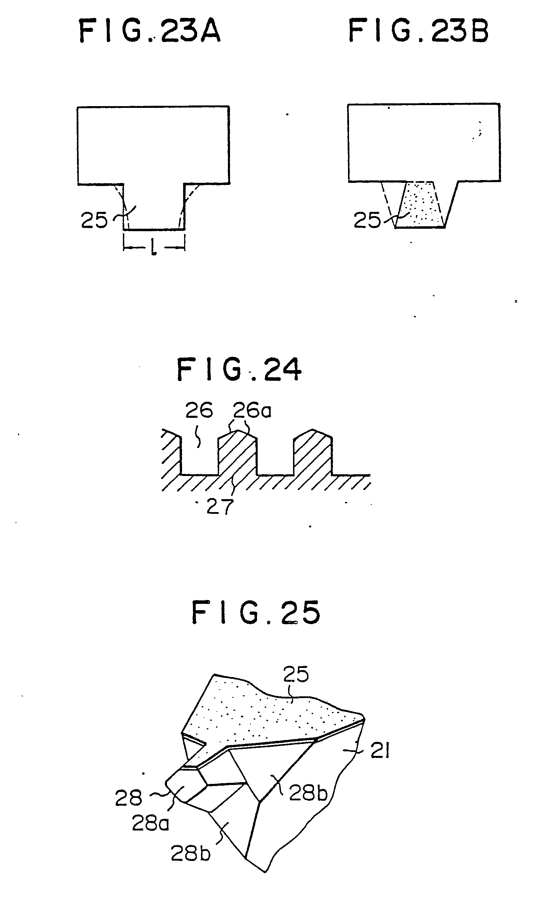

The electrode (25) of a constant width l like that of Fig. 23A is derived from the above way of grinding, however, an electrode which will get gradually broader in the upward direction may be obtainable actually as indicated by dotted line in Fig. 23A. To settle this problem, the electrode (25) will have to be inclined by an angle α in the grinding direction as shown in Fig. 22.

The electrode (25) is then obtainable in the shape of parallelogram ideally as shown in Fig. 23B from the above way of grinding.

Next, a grinding indicated by dotted line of Fig. 23B is obtainable through grinding a different side by turning the cantilever (37) as described hereinabove, which may give a trapezoidal form indicated by oblique line in Fig. 23B ideally.

Therefore, a rectangular electrode as shown in Fig. 23A can be formed practically by adjusting the angle α in the above constitution. Then, a face (28b) which is not parallel with a sliding face (28a) with a recording medium of the prism projection (28) can be formed as shown in Fig. 25 by providing an inclination (26a) on the top of the channel (26) of the grinder (27) as shown in Fig. 24.

## Claims

1. A pick-up stylus having a conical stylus base (1, 11, 21) of non-conductive material and a tip formed on said base, said tip comprising a face (15, 28a) adapted for contacting a recording disc and having a portion of its lateral surface in common with a portion of the lateral surface of said base, said common surface portion having an electrode (12, 25) formed thereon, said electrode being confined by two parallel portions of the lateral surface of said tip in order to form a substantially constant width of said electrode in the region of the tip, characterized in that all of the lateral surface portions of the tip are parallel to said electrode so that the tip is generally in the form of a cylinder (13, 16, 17, 18, 19, 20, 28).

2. A method of manufacturing a pick-up stylus comprising the steps of: rotating a grinder having an abrasive channel with a flat bottom; and pressing the tip of a conical non-conductive stylus base having an electrode arranged on a portion of its lateral surface into said channel to produce axially parallel portions of lateral surface confining said electrode to a substantially constant width in the region of the tip; characterized in that said stylus base is turned at a given range of angles to produce a cylindrically shaped tip.

3. The pick-up stylus manufacturing method as defined in Claim 2, wherein the stylus base is turned at a given range of angles as pressed onto the channel.

4. Pick-up stylus manufacturing method as defined in Claim 2, wherein the stylus base is turned at a given range of angles as detached from the channel and then pressed onto said channel.

5. The pick-up stylus manufacturing method as defined in Claim 2, wherein the electrode provided on a portion of the lateral surface of the stylus base is retained so as to incline against a line vertical to the surface of the grinder.

## Patentansprüche

1. Abtastnadel mit einer konischen Nadelbasis (1, 11, 21) aus nichtleitendem Werkstoff und einer an der Basis ausgebildeten Spitze, die eine zur Berührung mit einer Aufzeichnungsplatte dienende Stirnfläche (15, 28a) aufweist und einen Bereich ihrer seitlichen Oberfläche mit einem Bereich der seitlichen Oberfläche der Basis gemeinsam hat, wobei auf dem gemeinsamen Oberflächenbereich eine Elektrode (12, 25) ausgebildet ist, die durch zwei parallele Bereiche der seitlichen Oberfläche der Spitze zur Bildung einer im wesentlichen konstanten Breite der Elektrode in dem Bereich der Spitze begrenzt ist, dadurch gekennzeichnet, daß die gesamten seitlichen Oberflächenbereiche der Spitze zu der Elektrode parallel sind, so daß die Spitze allgemein die Form eines Zylinders (13, 16, 17, 18, 19, 20, 28) aufweist.

2. Verfahren zur Herstellung einer Abtastnadel mit den Verfahrensschritten: Drehen eines einen Schmirgelkanal mit einem ebenen Boden aufweisenden Schleifwerkzeuges, und Eindrücken der Spitze einer konischen nichtleitenden Nadelbasis, die auf einem Bereich ihrer seitlichen Oberfläche mit einer Elektrode versehen ist, in den Kanal, um axial parallele Bereiche der seitlichen Oberfläche zu erzeugen, die die Elektrode in dem Bereich der Spitze auf eine im wesentlichen konstante Breite begrenzen, dadurch gekennzeichnet, daß die Nadelbasis in einem vorgegebenen Winkelbereich gedreht wird, um eine zylinderförmige Spitze zu erzeugen.

3. Verfahren zur Herstellung einer Abtastnadel nach Anspruch 2, bei dem die Nadelbasis in einem vorgegebenen Winkelbereich gedreht wird, während sie auf den Kanal gedrückt wird.

4. Verfahren zur Herstellung einer Abtastnadel nach Anspruch 2, bei dem die Nadelbasis in einem vorgegebenen Winkelbereich gedreht wird, während sie von dem Kanal abgehoben ist und dann auf den Kanal gedrückt wird.

5. Verfahren zur Herstellung einer Abtastnadel nach Anspruch 2, bei dem die auf einem Bereich der seitlichen Oberfläche der Nadelbasis vorgesehene Elektrode derart gehalten wird, daß sie gegen eine zur Oberfläche des Schleifwerkzeugs senkrechte Linie geneigt ist.

## Revendications

1. Pointe de lecture comprenant une base de pointe conique (1, 11, 21) en matériau non conducteur et une extrémité formée sur ladite base, ladite extrémité comprenant une face (15, 28a) adaptée à être mise en contact avec un disque d'enregistrement et ayant une portion de sa surface latérale qui est commune avec une portion de la surface latérale de ladite base, ladite portion commune de surface ayant une électrode (12, 25) formée sur elle, ladite électrode étant délimitée par deux portions parallèles de la surface latérale de ladite extrémité afin de former une électrode de largeur sensiblement constante dans la région de l'extrémité, caractérisée en ce que toutes les portions de la surface latérale de l'extrémité sont parallèles à ladite électrode afin que l'extrémité ait généralement la forme d'un cylindre (13, 16, 17, 18, 19, 20, 28).

2. Procédé de fabrication d'une pointe de lecture comprenant les opérations de: mise en rotation d'un rodoir ayant un canal abrasif avec un fond plat; en enfoncement par pression de l'extrémité d'une base conique non conductrice de la pointe, ayant une électrode sur une partie de sa surface latérale, dans ledit canal pour former des portions axialement parallèles de surface latérale qui maintiennent ladite électrode à une largeur sensiblement constante dans la région de l'extrémité; caractérisé en ce que la base de la pointe est tournée dans une gamme donnée d'angles pour obtenir une extrémité de forme cylindrique.

3. Procédé de fabrication d'une pointe de lecture selon la revendication 2, dans lequel la base de la pointe est tournée dans une gamme donnée d'angles alors qu'elle est enfoncée par pression dans le canal.

4. Procédé de fabrication d'une pointe de lecture selon la revendication 2, dans lequel la base de la pointe est tournée dans une gamme donnée d'angles alors qu'elle est dégagée du canal, et est ensuite enfoncée par pression dans ledit canal.

5. Procédé de fabrication d'une pointe de lecture selon la revendication 2, dans lequel l'électrode prévue sur une portion de la surface latérale de la base de la pointe est maintenue de façon à être inclinée par rapport à une ligne verticale par rapport à la surface du rodoir.

# FIG.1
## PRIOR ART

# FIG.2
## PRIOR ART

# FIG.3A
# PRIOR ART

# FIG.3B
# PRIOR ART

0 055 485

# F I G . 4

# F I G . 5

FIG.6

FIG.7

FIG.8

FIG.9

FIG. 10

FIG. 11

FIG. 12

# F I G . 13

26    26

27

# F I G . 14

25

28

26

27

# F I G . 15

25

21

28

FIG. 16

34

31

32

33

35

36

37

39

27

30

FIG. 17

34

31

34a

36

35

39

37

38

40

41

27

21

# F I G . 18

# F I G . 19

# F I G. 20A

25

28

# F I G. 20B

25

28

# F I G. 20C

25

28

# F I G. 20D

25

28

# F I G. 20E

25

28

# FIG. 21

# FIG. 22

# FIG.23A

# FIG.23B

25 ⊢ L ⊣

25

# FIG.24

26  26a

27

# FIG.25

25

21

28

28a

28b

28b